(19) Europäisches Patentamt
European Patent Office
Office européen des brevets

(11) **EP 3 736 195 A1**

(12) **EUROPÄISCHE PATENTANMELDUNG**

(43) Veröffentlichungstag:
**11.11.2020 Patentblatt 2020/46**

(51) Int Cl.:
***B61L 15/00*** *(2006.01)*

(21) Anmeldenummer: **20171198.3**

(22) Anmeldetag: **23.04.2020**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **26.04.2019 AT 503852019**

(71) Anmelder: **Siemens Mobility Austria GmbH**
**1210 Wien (AT)**

(72) Erfinder:
• **Dejaco, Daniela**
**8020 Graz (AT)**

• **Girstmair, Bernhard Lukas**
**8010 Graz (AT)**
• **Grabner, Gerald**
**8010 Graz (AT)**
• **Haigermoser, Andreas**
**8455 Oberhaag (AT)**
• **Simon, Johannes**
**8043 Graz (AT)**

(74) Vertreter: **Deffner, Rolf**
**Siemens Mobility GmbH**
**Postfach 22 16 34**
**80506 München (DE)**

(54) **VERFAHREN UND VORRICHTUNG ZUR BESTIMMUNG FAHRTECHNISCHER PARAMETER BEI FAHRZEUGEN**

(57) Die Erfindung bezieht sich auf ein Verfahren und eine Vorrichtung zur Bestimmung fahrtechnischer Parameter bei Fahrzeugen, insbesondere zur Bestimmung von Seitenbeschleunigungen ($a_q$) eines Schienenfahrzeugs mit zumindest einem Fahrwerk (2) sowie mit zumindest einem Wagenkasten (1), wobei die Seitenbeschleunigungen ($a_q$) nach einer Bildungsvorschrift mit Geschwindigkeiten (v), Bogenradien (R), der Erdbeschleunigung (g), Überhöhungen (u) und einem definierten Messkreisabstand (B) bestimmt werden. Um vorteilhafte Verfahrensbedingungen zu erzielen, wird vorgeschlagen, dass die Seitenbeschleunigungen ($a_q$) mittels einer in oder an dem Fahrzeug angeordneten Recheneinheit (9) bestimmt werden, wobei die Geschwindigkeiten (v) aus Messungen (17) bestimmt und entsprechende Geschwindigkeitswerte in die Bildungsvorschrift eingesetzt werden, und wobei Werte für die Bogenradien (R) sowie die Überhöhungen (u) aus einer in der Recheneinheit (9) implementierten Datenbank (10) in die Bildungsvorschrift eingesetzt werden.

Dadurch wird eine betriebliche Durchführung von Überwachungs- und Diagnosevorgängen auf Basis der Seitenbeschleunigungen ($a_q$) ermöglicht.

FIG 2

EP 3 736 195 A1

**Beschreibung**

Die Erfindung bezieht sich auf ein Verfahren und eine Vorrichtung zur Bestimmung fahrtechnischer Parameter bei Fahrzeugen, insbesondere zur Bestimmung von Seitenbeschleunigungen ($a_q$) eines Schienenfahrzeugs mit zumindest einem Fahrwerk sowie mit zumindest einem Wagenkasten, wobei die Seitenbeschleunigungen ($a_q$) nach einer Bildungsvorschrift

$$a_q = \frac{v^2}{R} - g \cdot \frac{u}{B}$$ mit Geschwindigkeiten (v), Bogenradien (R), der Erdbeschleunigung (g), Überhöhungen (u) und einem definierten Messkreisabstand (B) bestimmt werden.

Fahrzeuge, insbesondere Schienenfahrzeuge müssen eine hohe Fahrsicherheit aufweisen. Eine genaue Einschätzung und Vorhersage von technischen Zuständen von Fahrzeugen, Fahrwerken und weiterer Fahrzeugkomponenten ist daher wichtig.

Für eine Fahrwerksdiagnose ist eine laufende Bildung und Auswertung von Beschleunigungsinformationen des Fahrzeugs wichtig, um beispielsweise auf einzelne Streckenabschnitte bezogene statistische Informationen, z. B. in Anlehnung an die Europäische Norm (EN) 14363, bilden zu können.

Zur Bildung der Beschleunigungsinformationen und der statistischen Informationen sind u.a. Informationen über Bogenradien und Überhöhungen bezüglich einer Strecke in Abhängigkeit von Positionen des Fahrzeugs erforderlich.

Aus dem Stand der Technik ist beispielsweise die WO 2016/058727 A1 bekannt, in welcher ein Diagnoseverfahren für Räder eines Schienenfahrzeugs offenbart ist. Aus Messungs- und Berechnungsschritten wird ein Räderverschleiß bestimmt. Für das Diagnoseverfahren können u.a. Werte für Gleisüberhöhungen und/oder Gleisbogenradien eingesetzt sein, welche beispielsweise aus einer Streckendatenbank ausgelesen werden können.

Dieser Ansatz weist in seiner bekannten Form den Nachteil auf, dass keine über eine Räderdiagnose hinausgehenden Diagnosevorgänge offenbart sind.

Der Erfindung liegt daher die Aufgabe zugrunde, ein gegenüber dem Stand der Technik weiterentwickeltes Verfahren anzugeben, bei welchem eine Beurteilung fahrdynamischer Eigenschaften des Fahrzeugs möglich ist.

Erfindungsgemäß wird diese Aufgabe gelöst mit einem Verfahren der eingangs genannten Art, bei dem die Seitenbeschleunigungen mittels einer in oder an dem Fahrzeug angeordneten Recheneinheit bestimmt werden, wobei die Geschwindigkeiten aus Messungen bestimmt und entsprechende Geschwindigkeitswerte in die Bildungsvorschrift eingesetzt werden, und wobei Werte für die Bogenradien sowie die Überhöhungen aus einer in der Recheneinheit implementierten Datenbank in die Bildungsvorschrift eingesetzt werden. Dadurch wird eine betriebliche Durchführung von Überwachungs- und Diagnosevorgängen auf Basis der Seitenbeschleunigungen ermöglicht, wobei eine Auswertung und Verarbeitung der Seitenbeschleunigungen bordseitig oder landseitig erfolgen kann.

Durch Auslesen von entsprechenden Werten für die Bogenradien und die Überhöhungen aus der Datenbank kann auf Drehratensensoren zur Bestimmung von Überhöhungen und Bogenradien verzichtet werden, wodurch Komplexität und Fehleranfälligkeit bei der Bestimmung fahrtechnischer Parameter reduziert und Zuverlässigkeit sowie Verfügbarkeit gesteigert werden.

Die bestimmten Seitenbeschleunigungen können zur Bildung von Überwachungs- und Diagnoseinformationen bezüglich des Fahrzeugs oder seiner Komponenten eingesetzt werden.

Es kann günstig sein, wenn mittels einer Ortungsvorrichtung des Fahrzeugs Positionen des Fahrzeugs erfasst werden, mittels der Recheneinheit die erfassten Positionen mit in der Datenbank gespeicherten Positionen korreliert werden und jene Werte für die Bogenradien und die Überhöhungen aus der Datenbank ausgelesen werden, welche den mit den erfassten Positionen korrelierenden, gespeicherten Positionen zugeordnet sind.

Dadurch fungiert die Datenbank als virtueller Sensor bei der Bestimmung fahrtechnischer Parameter. Es wird eine große Robustheit des erfindungsgemäßen Verfahrens erzielt.

Eine vorteilhafte Ausgestaltung erhält man, wenn die Geschwindigkeiten aus odometrischen Messungen bestimmt werden.

Durch diese Maßnahme sind für das erfindungsgemäße Verfahren keine eigenen Sensoren zur Bestimmung der Geschwindigkeiten erforderlich, es können vielmehr jene Einrichtungen eingesetzt werden, welche zur Bestimmung von Fahrgeschwindigkeiten ohnehin in dem Fahrzeug vorgesehen sind.

Es kann jedoch auch günstig sein, wenn die Geschwindigkeiten aus Messungen von Längsbeschleunigungen mittels zumindest eines Beschleunigungssensors des Fahrzeugs bestimmt werden und entsprechende Geschwindigkeitswerte mittels Integration der Längsbeschleunigungen gebildet werden.

Durch diese Maßnahme wird eine Redundanz zu Einrichtungen erzielt, welche zur Bestimmung von Fahrgeschwindigkeiten ohnehin in dem Fahrzeug vorgesehen sind. Weiterhin können Beschleunigungsinformationen, welche mittels des Beschleunigungssensors gebildet werden, neben Überwachungs- und Diagnosevorgängen auf Basis der Seitenbeschleunigungen auch für weitere Überwachungs- und Diagnosefunktionen eingesetzt werden.

Eine hilfreiche Lösung wird erreicht, wenn während Kurvenfahrten des Fahrzeugs laufend Seitenbeschleunigungswerte gebildet werden, wobei die Kurvenfahrten über Korrelieren von erfassten Positionen mit gespeicherten Positionen und Auslesen von mit den erfassten Positionen korrelierenden, den gespeicherten Positionen zugeordneten Bogenradien detektiert werden. Dadurch, dass während Kurvenfahrten bzw. Bogenfahrten Seitenbeschleunigungswerte gebildet werden, wird ein zielgerichteter Einsatz interner Abläufe der Recheneinheit bewirkt.

Nachfolgend wird die Erfindung anhand von Ausführungsbeispielen näher erläutert.

Es zeigen beispielhaft:

Fig. 1:   Ein Flussdiagramm zu einer beispielhaften Ausführungsvariante eines erfindungsgemäßen Verfahrens, und

Fig. 2:   Eine schematische Darstellung einer beispielhaften Ausführungsvariante einer erfindungsgemäßen Vorrichtung in einem Schienenfahrzeug.

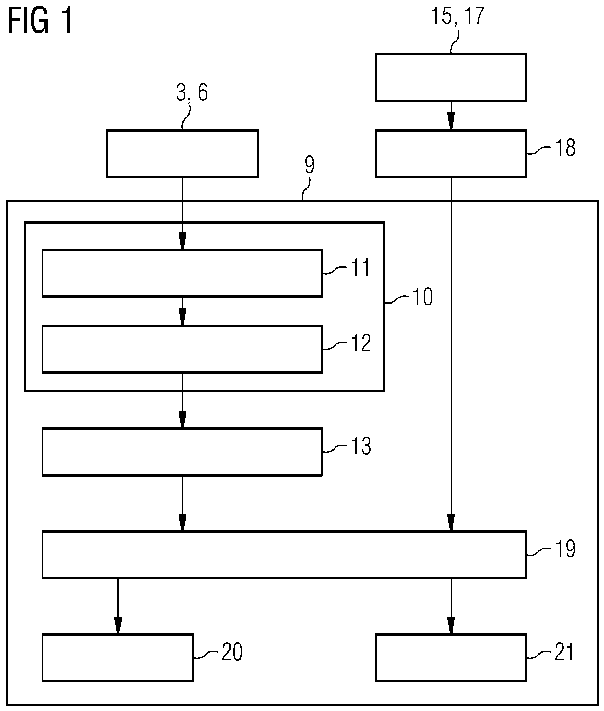

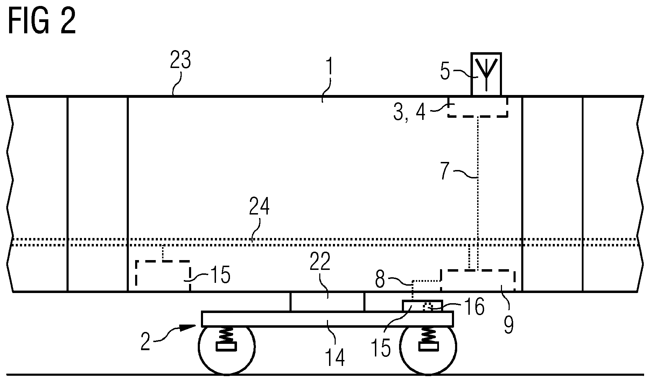

Fig. 1 zeigt ein Flussdiagramm zu einer beispielhaften Ausführungsvariante eines erfindungsgemäßen, teilweise computerimplementierten Verfahrens zur Bestimmung von fahrtechnischen Parametern eines Schienenfahrzeugs mit einem Wagenkasten 1 und einem Fahrwerk 2, welche in Fig. 2 gezeigt sind.

Mittels einer ebenfalls in Fig. 2 dargestellten Ortungsvorrichtung 3, welche im Dachbereich des Wagenkastens 1 vorgesehen ist und eine Global Positioning System (GPS) - Einheit 4 mit einer Antenne 5 aufweist, werden während eines Betriebs des Schienenfahrzeugs laufend Positionen $p_e$ des Schienenfahrzeugs als Längen- und Breitengrade erfasst (Positionserfassung 6). Diese Positionen $p_e$ werden als Positionsinformationen laufend über eine erste Leitung 7 an eine Recheneinheit 9, welche in dem Wagenkasten 1 angeordnet ist und mit der Ortungsvorrichtung 3 signalleitend verbunden ist, übertragen und in der Recheneinheit 9 ausgewertet. In der Recheneinheit 9 ist eine Datenbank 10 implementiert, welche als computerimplementierte, prinzipiell aus dem Stand der Technik bekannte, mehrdimensionale Look-Up-Tabelle bzw. als mehrdimensionales Array ausgebildet ist.

In der Look-Up-Tabelle sind als Tabelleneinträge gespeicherte Positionen $p_g$ des Schienenfahrzeugs in einem kartesischen Koordinatensystem vorgesehen. Entsprechende $x_g$-Koordinaten und $y_g$-Koordinaten basieren dabei auf mit einem mittleren Erdradius in dieses Koordinatensystem transformierten Längen- und Breitengraden.

Entsprechende Koordinatentransformationsvorschriften sind aus dem Stand der Technik bekannt.

Bezüglich einer definierten Anzahl an Strecken (alle Strecken, welche das Schienenfahrzeug betrieblich befährt) sind für jeden einer Kurve zugeordneten Positionseintrag ein entsprechender Bogenradius R und eine Überhöhung u eines Gleises, d.h. ein Höhenunterschied zwischen zwei Schienen des Gleises, von ungleich 0 zugeordnet.

Erfindungsgemäß ist es jedoch auch vorstellbar, dass Kurven zugeordneten Positionseinträgen mehr als ein Bogenradius R und mehr als eine Überhöhung u zugewiesen wird, um hierdurch beispielsweise auch Übergangsbögen erfassen zu können.

Ist eine Strecke mehrgleisig ausgeführt, so sind alle Gleise bzw. Richtungsgleise dieser Strecke über entsprechende, gespeicherte Positionsinformationen und zugeordnete Bogenradien R und Überhöhungen u in der Datenbank 10 erfasst. Jeder mit $x_g$-Koordinate und $y_g$-Koordinate gespeicherten Position $p_g$ in einem gekurvten Streckenabschnitt sind also entsprechende Werte für den Bogenradius R der Kurve sowie die Überhöhung u zugewiesen.

Gespeicherte Positionen $p_g$ in geraden Streckenabschnitten weisen Werte für den Bogenradius R und die Überhöhung u von gleich 0 auf.

Die mittels der Ortungsvorrichtung 3 als Längen- und Breitengrade betrieblich laufend erfassten Positionen $p_e$ des Schienenfahrzeugs werden in der Recheneinheit 9 mit dem mittleren Erdradius in $x_e$-Koordinaten und $y_e$-Koordinaten des kartesischen Koordinatensystems transformiert.

Entsprechende Koordinatentransformationsvorschriften sind aus dem Stand der Technik bekannt.

Es erfolgt ein laufender Abgleich der $x_e$-Koordinaten und der $y_e$-Koordinaten mit den $x_g$-Koordinaten und den $y_g$-Koordinaten, wobei aus den $x_e$-Koordinaten und den $x_g$-Koordinaten x-Differenzen sowie aus den $y_e$-Koordinaten und den $y_g$-Koordinaten y-Differenzen gebildet werden (Tabellen-Look-Up 11).

Es werden aus der Datenbank 10 Werte für den Bogenradius R und die Überhöhung u ausgelesen (Auslesevorgang 12), die jenen gespeicherten Positionen $p_g$ zugeordnet sind, für welche die nach Absolutbeträgen kleinsten x-Differenzen und y-Differenzen ermittelt werden. Diese Werte für den Bogenradius R und die Überhöhung u passen zu der aktuell erfassten Position $p_e$ des Schienenfahrzeugs. Auf diese Weise werden die erfassten Positionen $p_e$ mit den gespeicherten Positionen $p_g$ korreliert und jene Werte für den Bogenradius R und die Überhöhung u aus der Datenbank 10 ausgelesen, welche der mit der erfassten Position $p_e$ korrelierenden, gespeicherten Position $p_g$ zugeordnet sind.

Wird mittels eines Prüfvorgangs 13 festgestellt, dass die Werte für den Bogenradius R und die Überhöhung u für die aktuell erfasste Position $p_e$ gleich 0 sind, so weist dies auf einen geraden Streckenabschnitt hin und es werden für diesen geraden Streckenabschnitt keine weiteren Verfahrensschritte mehr ausgeführt.

Erfindungsgemäß ist es auch vorstellbar, in dem Prüfvorgang 13 beispielsweise ausschließlich den Bogenradius R auf einen Wert von gleich 0 hin zu prüfen und so einen geraden Streckenabschnitt zu detektieren.

Geschwindigkeiten v bzw. Fahrgeschwindigkeiten des Schienenfahrzeugs werden aus Radumdrehungszählungen, d.h. mittels odometrischer Messungen (Messung 17 bzw. Messungen 17) bestimmt. Aus Radumdrehungen je Zeiteinheit werden Raddrehzahlen und daraus mit einem Räderradius die Geschwindigkeiten v ermittelt (Geschwindigkeitsermittlung 18). Es ist hierfür eine in dem Schienenfahrzeug angeordnete Geschwindigkeitsmesseinrichtung eingesetzt, welche als Messvorrichtung 15 fungiert. Entsprechende Werte für die Geschwindigkeit v werden von dieser Geschwindigkeitsmesseinrichtung über einen Zugbus 24 des Schienenfahrzeugs an die Recheneinheit 9 übertragen.

Erfindungsgemäß ist es jedoch auch denkbar, dass die Messvorrichtung 15 auf einem in Fig. 2 gezeigten Fahrwerksrahmen 14 des Fahrwerks 2 angeordnet ist und einen Beschleunigungssensor 16 aufweist, welcher laufend Längsbeschleunigungen $a_x$ des Schienenfahrzeugs erfasst. Diese Längsbeschleunigungen $a_x$ werden laufend über eine zweite Leitung 8, über welche die Messvorrichtung 15 signalleitend mit der Recheneinheit 9 verbunden ist, an die Recheneinheit 9 übermittelt. In der Recheneinheit 9 werden die Längsbeschleunigungen $a_x$ laufend mittels eines aus dem Stand der Technik bekannten Integrationsverfahrens über einen definierten Zeitabschnitt integriert und auf diese Weise die Geschwindigkeiten v ermittelt. Dieses Vorgehen ist als Redundanz zu der oben beschriebenen Geschwindigkeitsermittlung 18 vorgesehen.

Die ausgelesenen Werte für den Bogenradius R und die Überhöhung u, Werte für die Geschwindigkeit v sowie die Erdbeschleunigung g = 9,81 m/s² und ein definierter Messkreisabstand B (der Messkreisabstand B, auch nominaler Berührpunktabstand genannt und auch mit 2b bezeichnet, beträgt in dieser beispielhaften Ausführungsvariante eines erfindungsgemäßen Verfahrens 1500 mm, wobei es sich um den Messkreisabstand B für Normalspur, bestimmt aus einer Summe aus einem Grundmaß einer Spurweite und 65 mm, handelt) werden laufend in folgende Bildungsvorschrift eingesetzt:

$$a_q = \frac{v^2}{R} - g \cdot \frac{u}{B}$$

Aus dieser Bildungsvorschrift werden in der Recheneinheit 9 laufend Werte für einen fahrtechnischen Parameter, nämlich für eine Seitenbeschleunigung $a_q$, ermittelt (Seitenbeschleunigungsermittlung 19). Bei der Seitenbeschleunigung $a_q$, bestimmt mittels obiger Bildungsvorschrift, handelt es sich um eine Beschleunigungskomponente in Gleisebene, quer zu einer Längsrichtung des Gleises.

Seitenbeschleunigungswerte werden während Kurvenfahrten bzw. Bogenfahrten des Schienenfahrzeugs gebildet, wobei eine Kurvenfahrt, wie oben bemerkt, über Korrelieren der erfassten Position $p_e$ mit der gespeicherten Position $p_g$ und Auslesen des der mit der erfassten Position $p_e$ korrelierenden, gespeicherten Position $p_g$ zugeordneten Bogenradius R detektiert wird.

Die Werte für die Seitenbeschleunigung $a_q$ werden zur Bildung von Überwachungs- und Diagnoseinformationen genützt. Die Werte für die Seitenbeschleunigung $a_q$ werden u.a. einerseits dazu eingesetzt, um unzulässige Betriebszustände in Kurvenfahrten des Schienenfahrzeugs detektieren zu können (Überwachungsinformationsbildung 20) und andererseits dazu eingesetzt, um Schäden, Verschleiß und Restlebensdauern eines nicht gezeigten Anti-Wanksystems des Schienenfahrzeugs zu bestimmen (Diagnoseinformationsbildung 21). Es ist darüber hinaus auch denkbar, dass mit den Werten der Seitenbeschleunigung $a_q$ beispielsweise auch Diagnosen bezüglich Komponenten des Schienenfahrzeugs, z.B. eines Feder-Dämpfersystems, gebildet werden oder Streuungen aufgezeichneter Messwerte bewertet werden etc.

Das erfindungsgemäße Verfahren ist in dieser beispielhaften Ausführungsvariante für ein Schienenfahrzeug eingesetzt. Erfindungsgemäß ist jedoch eine Anwendung des Verfahrens für jedes Fahrzeug denkbar, dessen Fahrweg Bogenradien R sowie Überhöhungen u, und dessen Radsätze einen Messkreisabstand B aufweisen. Beispielsweise kann das erfindungsgemäße Verfahren auch für einen Spurbus oder ein anderes spurgebundenes, gummibereiftes Fahrzeug z.B. für eine U-Bahn mit Gummirädern etc. eingesetzt sein.

In Fig. 2 ist ein Ausschnitt eines Schienenfahrzeugs schematisch dargestellt, in welchem eine erfindungsgemäße Vorrichtung zur Durchführung eines erfindungsgemäßen Verfahrens, welches beispielhaft im Zusammenhang mit Fig. 1 beschrieben ist, vorgesehen ist.

Das Schienenfahrzeug weist einen Wagenkasten 1 und ein über eine Sekundärfederanordnung 22 mit diesem verbundenes Fahrwerk 2 mit einem Fahrwerksrahmen 14 auf.

In einem Dachbereich des Wagenkastens 1 ist eine Ortungsvorrichtung 3 mit einer Global Positioning System - Einheit 4 und einer Antenne 5 vorgesehen. Weiterhin ist in dem Wagenkasten 1 eine Recheneinheit 9 angeordnet, welche über eine erste Leitung 7 signalleitend mit der Ortungsvorrichtung 3 verbunden ist. Erfindungsgemäß kann die Ortungsvorrichtung 3 auch als Teil einer bordseitigen Einrichtung eines Zugbeeinflussungssystems ausgebildet sein. An dem Fahrwerk 2 bzw. auf dem Fahrwerksrahmen 14 ist eine Messvorrichtung 15 mit einem Beschleunigungssensor 16 angeordnet, welche über eine zweite Leitung 8 signalleitend mit der Recheneinheit 9 verbunden ist. Weiterhin weist die Messvorrichtung 15 eine odometrische Geschwindigkeitsmesseinrichtung auf, welche in dem Wagenkasten 1 vorgesehen ist, und über einen Zugbus 24 des Schienenfahrzeugs signalleitend mit der Recheneinheit 9 verbunden ist.

Die Ortungsvorrichtung 3, die Recheneinheit 9 und die Messvorrichtung 15 sind über ein nicht gezeigtes Bordnetz des Schienenfahrzeugs mit Elektrizität versorgt. Die Recheneinheit 9 ist als Teil einer Überwachungs- und Diagnoseeinrichtung des Schienenfahrzeugs zur Bildung von Überwachungs- und Diagnoseinformationen, welche im Zusammenhang mit Fig. 1 erwähnt sind, ausgebildet.

Auf Grundlage von Ortungssignalen der Ortungsvorrichtung 3 und Messignalen der Messvorrichtung 15 werden über eine im Zusammenhang mit Fig. 1 beschriebene Bildungsvorschrift Seitenbeschleunigungen $a_q$ bestimmt, wobei in diese Bildungsvorschrift Bogenradien R und Überhöhungen u eines Gleises, welche aus einer in der Recheneinheit 9 implementierten Datenbank 10 ausgelesen werden, eingesetzt werden.

Auf Basis der Seitenbeschleunigungen $a_q$ werden die genannten Überwachungs- und Diagnoseinformationen gebildet.

In dieser beispielhaften Ausführungsvariante einer erfindungsgemäßen Vorrichtung ist die Recheneinheit 9 in dem Wagenkasten 1 und die Ortungsvorrichtung 3 teilweise in dem Wagenkasten 1 angeordnet (die Antenne 5 ist auf einem Fahrzeugdach 23 vorgesehen). Erfindungsgemäß ist es jedoch auch vorstellbar, dass die Recheneinheit 9 und die Ortungsvorrichtung 3 an dem Wagenkasten 1 vorgesehen sind, beispielsweise in einem mit dem Wagenkasten 1 verbundenen Container, der z.B. auf dem Fahrzeugdach 23 angeordnet ist. Weiterhin ist es vorstellbar, dass die Messvorrichtung 15 an dem Wagenkasten 1 (z.B. in dem Container) oder in dem Fahrwerk 2 (z.B. in einem Hohlprofil des Fahrwerksrahmens 14) vorgesehen ist.

Darüber hinaus ist es denkbar, dass die Ortungsvorrichtung 3, die Recheneinheit 9 und die Messvorrichtung 15 in bzw. auf beliebigen Wagenkästen oder Fahrwerken des Schienenfahrzeugs angeordnet sind bzw. auf verschiedene Wagenkästen oder Fahrwerke verteilt sind.

Beispielsweise kann die Messvorrichtung 15 in einem ersten Wagenkasten oder auf einem ersten Fahrwerk, die Recheneinheit 9 in einem zweiten Wagenkasten oder auf einem zweiten Fahrwerk und die Ortungsvorrichtung 3 in einem dritten Wagenkasten oder auf einem dritten Fahrwerk des Schienenfahrzeugs vorgesehen sein, wobei die Messvorrichtung 15 und die Ortungsvorrichtung 3 über den Zugbus 24 und entsprechende Anschlussleitungen mit der Recheneinheit 9 verbunden sind.

Liste der Bezeichnungen

| 1 | Wagenkasten |
|---|---|
| 2 | Fahrwerk |
| 3 | Ortungsvorrichtung |
| 4 | Global Positioning System - Einheit |
| 5 | Antenne |
| 6 | Positionserfassung |
| 7 | Erste Leitung |
| 8 | Zweite Leitung |
| 9 | Recheneinheit |
| 10 | Datenbank |

| 11 | Tabellen-Look-Up |
|---|---|
| 12 | Auslesevorgang |
| 13 | Prüfvorgang |
| 14 | Fahrwerksrahmen |
| 15 | Messvorrichtung |
| 16 | Beschleunigungssensor |
| 17 | Messung |
| 18 | Geschwindigkeitsermittlung |
| 19 | Seitenbeschleunigungsermittlung |
| 20 | Überwachungsinformationsbildung |
| 21 | Diagnoseinformationsbildung |
| 22 | Sekundärfederanordnung |
| 23 | Fahrzeugdach |
| 24 | Zugbus |

| $p_e$ | Erfasste Position |
|---|---|
| $p_g$ | Gespeicherte Position |
| R | Bogenradius |
| u | Überhöhung |
| $a_x$ | Längsbeschleunigung |
| v | Geschwindigkeit |
| g | Erdbeschleunigung |
| B | Messkreisabstand |
| $a_q$ | Seitenbeschleunigung |

## Patentansprüche

1. Verfahren zur Bestimmung fahrtechnischer Parameter bei Fahrzeugen, insbesondere zur Bestimmung von Seitenbeschleunigungen ($a_q$) eines Schienenfahrzeugs mit zumindest einem Fahrwerk sowie mit zumindest einem Wagenkasten, wobei die Seitenbeschleunigungen ($a_q$) nach einer Bildungsvorschrift $a_q = \frac{v^2}{R} - g \cdot \frac{u}{B}$ mit Geschwindigkeiten (v), Bogenradien (R), der Erdbeschleunigung (g), Überhöhungen (u) und einem definierten Messkreisabstand (B) bestimmt werden, **dadurch gekennzeichnet, dass** die Seitenbeschleunigungen ($a_q$) mittels einer in oder an dem Fahrzeug angeordneten Recheneinheit (9) bestimmt werden, wobei die Geschwindigkeiten (v) aus Messungen (17) bestimmt und entsprechende Geschwindigkeitswerte in die Bildungsvorschrift eingesetzt werden, und wobei Werte für die Bogenradien (R) sowie die Überhöhungen (u) aus einer in der Recheneinheit (9) implementierten Datenbank (10) in die Bildungsvorschrift eingesetzt werden.

2. Verfahren nach Anspruch 1, **dadurch gekennzeichnet, dass** die bestimmten Seitenbeschleunigungen ($a_q$) zur Bildung von Überwachungs- und Diagnoseinformationen bezüglich des Fahrzeugs oder seiner Komponenten eingesetzt werden.

3. Verfahren nach Anspruch 1 oder 2, **dadurch ge-**

**kennzeichnet, dass** mittels einer Ortungsvorrichtung (3) des Fahrzeugs Positionen ($p_e$) des Fahrzeugs erfasst werden, mittels der Recheneinheit (9) die erfassten Positionen ($p_e$) mit in der Datenbank (10) gespeicherten Positionen ($p_g$) korreliert werden und jene Werte für die Bogenradien (R) und die Überhöhungen (u) aus der Datenbank (10) ausgelesen werden, welche den mit den erfassten Positionen ($p_e$) korrelierenden, gespeicherten Positionen ($p_g$) zugeordnet sind.

4. Verfahren nach einem der Ansprüche 1 bis 3, **dadurch gekennzeichnet, dass** die Geschwindigkeiten (v) aus odometrischen Messungen (17) bestimmt werden.

5. Verfahren nach einem der Ansprüche 1 bis 3, **dadurch gekennzeichnet, dass** die Geschwindigkeiten (v) aus Messungen (17) von Längsbeschleunigungen ($a_x$) mittels zumindest eines Beschleunigungssensors (16) des Fahrzeugs bestimmt werden und entsprechende Geschwindigkeitswerte mittels Integration der Längsbeschleunigungen ($a_x$) gebildet werden.

6. Verfahren nach einem der Ansprüche 1 bis 5, **dadurch gekennzeichnet, dass** während Fahrten des Fahrzeugs laufend Seitenbeschleunigungswerte gebildet werden.

7. Verfahren nach einem der Ansprüche 1 bis 5, **dadurch gekennzeichnet, dass** während Kurvenfahrten des Fahrzeugs laufend Seitenbeschleunigungswerte gebildet werden, wobei die Kurvenfahrten über Korrelieren von erfassten Positionen ($p_e$) mit gespeicherten Positionen ($p_g$) und Auslesen von mit den erfassten Positionen ($p_e$) korrelierenden, den gespeicherten Positionen ($p_g$) zugeordneten Bogenradien (R) detektiert werden.

8. Vorrichtung zur Durchführung eines Verfahrens nach einem der Ansprüche 1 bis 7, **dadurch gekennzeichnet, dass** die Recheneinheit (9) mit der Datenbank (10) und eine Messvorrichtung (15) in oder an zumindest einem Wagenkasten oder zumindest einem Fahrwerk des Fahrzeugs angeordnet sind, die Ortungsvorrichtung (3) in oder an einem beliebigen Wagenkasten des Fahrzeugs vorgesehen ist und die Recheneinheit (9) mit der Messvorrichtung (15) sowie mit der Ortungsvorrichtung (3) signalleitend verbunden ist.

9. Vorrichtung nach Anspruch 8, **dadurch gekennzeichnet, dass** die Recheneinheit (9) als Teil einer Überwachungs- und Diagnoseeinrichtung des Fahrzeugs zur Bildung der Überwachungs- und Diagnoseinformationen ausgebildet ist.

10. Vorrichtung nach Anspruch 8 oder 9, **dadurch gekennzeichnet, dass** die Messvorrichtung (15) als odometrische Geschwindigkeitsmesseinrichtung ausgebildet ist.

11. Vorrichtung nach Anspruch 8 oder 9, **dadurch gekennzeichnet, dass** die Messvorrichtung (15) den zumindest einen Beschleunigungssensor (16) aufweist, welcher auf einem Fahrwerksrahmen (14) angeordnet ist.

12. Vorrichtung nach einem der Ansprüche 8 bis 11, **dadurch gekennzeichnet, dass** die Ortungsvorrichtung (3) eine Global Positioning System - Einheit (4) aufweist.

FIG 1

FIG 2

Europäisches
Patentamt

European
Patent Office

Office européen
des brevets

## EUROPÄISCHER RECHERCHENBERICHT

Nummer der Anmeldung

EP 20 17 1198

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | ES 2 119 644 A1 (CONST Y AUX FERROCARRILES SA [ES]) 1. Oktober 1998 (1998-10-01) <br> * Zusammenfassung; Abbildungen 1, 2, 5 * <br> * Spalten 1,2 * <br> * Spalte 3, Zeile 38 - Spalte 5, Zeile 34 * <br> * Anspruch 1 * <br> ----- | 1-12 | INV. <br> B61L15/00 |
| Y | Martin Lindahl: "Track geometry for high-speed railways A literature survey and simulation of dynamic vehicle responce", <br> , <br> 1. Januar 2001 (2001-01-01), XP055735417, <br> Gefunden im Internet: <br> URL:http://www.europakorridoren.se/spargeo metri.pdf <br> * Abschnitt 2.2.1 * <br> ----- | 1-12 | |
| Y | WO 2005/030554 A1 (BOMBARDIER TRANSP GMBH [DE]; SCHUELLER UWE [DE]; LITFIN SVEN [DE]) 7. April 2005 (2005-04-07) <br> * Absätze [0001] - [0010]; Abbildung 1 * <br> ----- | 1-12 | RECHERCHIERTE SACHGEBIETE (IPC) <br><br> B61L |
| A | EP 0 819 912 A2 (TOYOTA MOTOR CO LTD [JP]) 21. Januar 1998 (1998-01-21) <br> * das ganze Dokument * <br> ----- | 1-12 | |

Der vorliegende Recherchenbericht wurde für alle Patentansprüche erstellt

| Recherchenort | Abschlußdatum der Recherche | Prüfer |
|---|---|---|
| München | 1. Oktober 2020 | Robinson, Victoria |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

 

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 17 1198

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-10-2020

| Im Recherchenbericht angeführtes Patentdokument | Datum der Veröffentlichung | Mitglied(er) der Patentfamilie | Datum der Veröffentlichung |
|---|---|---|---|
| ES 2119644 A1 | 01-10-1998 | KEINE | |
| WO 2005030554 A1 | 07-04-2005 | AT 414643 T | 15-12-2008 |
| | | EP 1697194 A1 | 06-09-2006 |
| | | ES 2318322 T3 | 01-05-2009 |
| | | GB 2406395 A | 30-03-2005 |
| | | PL 1697194 T3 | 30-04-2009 |
| | | PT 1697194 E | 20-02-2009 |
| | | WO 2005030554 A1 | 07-04-2005 |
| EP 0819912 A2 | 21-01-1998 | DE 19730336 A1 | 29-01-1998 |
| | | DE 69731585 T2 | 01-12-2005 |
| | | EP 0819912 A2 | 21-01-1998 |
| | | US 6092005 A | 18-07-2000 |
| | | US 6092014 A | 18-07-2000 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016058727 A1